(19) Europäisches Patentamt
European Patent Office
Office européen des brevets

(11) Publication number: 0 012 138
B1

(12) # EUROPEAN PATENT SPECIFICATION

(45) Date of publication of patent specification: 06.04.83

(51) Int. Cl.³: G 06 F 3/02, G 06 K 11/00, G 01 D 5/243, G 08 C 21/00

(21) Application number: 78300807.1

(22) Date of filing: 13.12.78

(54) **Position sensing apparatus.**

(43) Date of publication of application:
25.06.80 Bulletin 80/13

(45) Publication of the grant of the patent:
06.04.83 Bulletin 83/14

(84) Designated Contracting States:
DE FR IT NL

(56) References cited:
GB - A - 1 340 522
US - A - 3 624 293
US - A 3 873 770

ELECTRONICS AND COMMUNICATIONS IN JAPAN, vol. 57-A, nr. 10, 1974, Washington, HISAO HIRAKI: "A new graphic input device by means of resistive phase shifters", pages 4—12

(73) Proprietor: CONTROL TELE-SYSTEMS LIMITED
Multibus House 15 Station Approach
Woking Surrey (GB)

(72) Inventor: Howbrook, Ernest
12 Moseley Road Cheadle Hulme
Cheadle Cheshire (GB)

(74) Representative: Medlock, Edwin Roy
10 Victoria Road Grappenhall
Warrington, WA4 2EN (GB)

EP 0 012 138 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Position sensing apparatus

This invention relates to position sensing apparatus of the kind comprising a first coil arrangement defining a co-ordinate direction and a second coil arrangement movable relative to the first coil arrangement in said co-ordinate direction wherein the two coil arrangements are electromagnetically coupled by applying an A.C. input signal to the input terminals of the second coil arrangement and output terminals of the first coil arrangement are provided whereat a signal is produced which identifies the relative position of the coil arrangements.

Many forms of apparatus are known wherein the position of one component (frequency referred to as a "pen" or "cursor") can be identified relative to another component. Such apparatus, depending on use, can be identified as Data Tablets, Signature Verifiers, Line Tracers, Chart Readers, Co-ordinate Locators etc. Such apparatus can involve a diversity of technologies. For example GB—PS 1,310,683 a form of apparatus is shown in which pressure generated by a pen affects the contact position between two resistive sheets. In U.S.P. 2,925,467 a conducting stylus functions as a movable contact on a resistive tablet. U.S.P. 3,626,483 discloses a sonic arrangement. GB—PS 982,008 has contact sheets on which a pen can write, the sheets being separated by an oil film. Other devices, such as shown in GB—PS 1,306,040 (which cross refer to U.S.P. 2,988,643 and U.S. 3,135,857 showing optical systems) use mechanical servo arrangements. Laser systems are also known.

From this complexity of technologies apparatus which is highly sensitive, structurally robust, stable, relatively inexpensive, and free of movable parts other than that of the pen or cursor, does not arise. For apparatus to have this specification one looks to electromagnetic devices and reference is made in this respect to the disclosure of GB—PS 1,304,376 and 1,350,113 in the name of the Bendix Corporation. These specifications disclose an "x", "y" co-ordinate axis system in which, for each axis there is, at one level, a single conductor providing a plurality of equally spaced long parallel portions and at another level a similar single conductor known as a "quadrature conductor". Thus, for both "x" and "y" axes there are four conductors at various levels and these define a tablet area which can be traversed by a pen or cursor in the form of a coil which is related in size to the spacing of the parallel portions of the conductors and which must be close coupled with the conductors, although with four layers, this can introduce problems such as positional ambiguity and neutralising requirements on certain conductors. U.S.P. 3,819,857 from which the present invention is characterised in the claims also discloses an electromagnetic device but is a step-wise system and has ambiguities and lacks potential for a high degree of sensitivity. Electrostatic devices are known (see for example Electronics and Communications in Japan, vol. 57-A, Nr 10, 1974, Washington) but these may suffer from risks of errors arising from stray pick up from noise sources and operators hands, and are susceptible to error if metal objects appear on the surface on which the pen is designed to contact.

The present invention provides improved position sensing apparatus of the kind stated characterised in that the first coil arrangement comprises a multiplicity of at least three coils each shaped to have a length greater than its width and mounted with their major axes lateral to each other and transverse to said co-ordinate direction; in that phase angle shifting units are provided at or between the coils of the first coil arrangement so that the coils and the units define a network having a progressive phase angle change characteristic and so that the signal at the output terminals is given a progressive phase angle shift which is unambiguously representative of the relative positioning of the two coil arrangements; and in that the coil arrangements are loosely coupled with each other so that the phase angle change with said relative positioning is linear.

The present invention provides improved position sensing apparatus in which construction is simplified, which can operate with loose coupling, is free of ambiguity and is highly sensitive. Advantages which arise from use of the present invention are as follows:

(a) for each axis one layer of conductors is necessary. This simplifies design and it allows a compact apparatus to be designed,
(b) the coupling between a pen and the layer of conductors can be loose and hence more freedom in design is possible. A thick robust writing surface for example, can be provided between the pen and the layer of conductors without affecting accuracy or sensitivity significantly,
(c) the pen can be placed anywhere above the layer of conductors and no ambiguity arises. There is no need to move the pen from a set zero position,
(d) a high sensitivity is possible, such as the sensing of a position to an accuracy of a tenth of millimetre for example.

The invention will now be described further with reference to the accompanying drawings in which:

Figure 1 is a diagram of first and second coil arrangements with a graph showing induced e.m.f's;

Figure 2 is an elementary circuit diagram showing parts of a position sensing apparatus according to the invention;

Fig. 3 is a graph showing how the phase angle of a phase-characterised signal varies with relative displacement of the coil arrangements in the circuit shown in Figure 2;

Figure 4 is a diagrammatic representation of a writing tablet including position sensing apparatus according to the present invention;

Figures 5A and 5B show respectively parallel and series connected coils in an array with phase angle shift units;

Fig. 6 is a diagram in support of a mathematical explanation;

Figure 7 shows a writing tablet amplifier.

In the ensuing description the term "phase" means "phase angle" as distinct from phase reversal.

Figure 1 shows a coil 10, of a second coil arrangement of circular shape, positioned over coils 11 of a first coil arrangement. The coils 10 and 11 are loosely coupled. That is the distance between coils 10 and 11 is preferably the same as or more than the spacing between coils 11. The coupling is loose so that the movement of coil 10 produces a smooth output from coils 11 as explained later with reference to Figure 3. The coils 11 are of elongate shape, Fig. 1 showing the narrower dimension, so that they have lengths greater than their widths. The major axes of the coils are mounted laterally to each other. For the position shown in Fig. 1 with coil 10 centred on the array coils 11, and for an A.C. input to coil 10, e.m.f's 11*a* are induced in the coils 11 having magnitudes as indicated in the graph immediately below coils 11. The dotted envelope 11*b* represents the theoretical position of "infinite" coils 11. If phase shift units 12 are inserted between the coils 11 (shown in circuit diagram form in Figure 2) and the coils 11 and units 12 are connected in series (see also Figure 5B) then a signal is obtained at terminals 13 which is phase displaced relative to the input signal applied at terminals 14 of coil 10, the extent of phase displacement being unambiguously related to the position coil 10 has along the coils 11. For a constant phase displacement at each unit 12, and with loose coupling between coils 10 and 11, the relationship of phase to movement of coil 10 can be made nearly linear. Where there is a departure from linearity (more noticeable with end effects arising at the limits of displacement of the coil 10) the linearity can be restored by appropriate selection of phase displacement in each circuit 12 or by the provision of additional coils to give the array of coils 11 the appearance of having an infinite length. A graph 15 of coil 10 displacement "d" against phase displacement $\Phi$ is shown in Fig. 3. The graph 16 shows the effect of altering the distance *h* (Figure 2) between coil 10 and coils 11 whilst maintaining loose coupling. The effect is not a major one. If the coupling is made close the graph 15 would have peaks and thus linearity would be destroyed.

The coils 11 could be connected in parallel (see Figure 5A). In this event each is provided with phase displacement unit 12.

Phase displacement in each unit 12 is typically between 10° to 45° but could be as high as 120° and may be chosen in relation to the number of coils so that the overall phase shift is less than 360° but could be more by including an ambiguity eliminating circuit. Such a circuit could include a further set of phase shift circuits 12 but with a smaller phase shift. One set of circuits 12 would provide one output 13 and the other set would provide another output 13. The two outputs could be combined to give a single ambiguity free arrangement. The ratio of distance *h* between coil 10 and array coils 11 to the width of one of the coils 11 is preferably in the range of 2 to 4.

Fig. 4 shows the invention set up in the form of a writing tablet.

The coil 10 has a hollow centre into which is fitted a lens with cross hairs 20. The coil 10 is movable by hand over the surface on table 21. Between the coil 10 and table 21 there could typically be a drawing, a graph, a schedule of parts or a shape, details of which have to be recorded, displayed, or transmitted. Fastened under the table 21 there are two arrays 22, 23 of coils 11, array 22 extending in one direction or axis parallel to the plane of the table 21 and array 23 extending in the co-ordinate direction or axis also parallel to the plane of the table 21.

Movement of coil 10, when powered from an A.C. supply (such as one of 1 to 20 KHZ frequency) will produce from each array a phase-characterised signal from which can be derived output signals for storage, display, processing or transmission. Power to coil 10 is shown under control of a switch 24 which can be closed when the coil is correctly located over a point of interest on the surface 21. The switch could be foot operated or finger operated on the side of the coil, or pressure operated by pressing down on the coil.

The moving coil arrangement may consist of more than one coil. This is illustrated in Figure 6 where a pen 30 is provided with two coils 10A and 10B, displaced from the point of the pen and displaced from each other along the length of the pen. They are powered alternately from a common supply. When the pen is vertical the coils behave like a single coil positioned at a location distance *d* from a datum point. However, the point of the pen will not be readily visible to a user, as may be required if it is to be used to trace over an outline. This lack of visibility will cause the user of the pen to tilt the pen. If there were only one coil then a positional error arises as the coil position in the *d* direction has changed with tilting and, to less effect, the height of the coil above a datum has changed and the orientation of the coil has changed. With the second coil present a "tilt-differential" signal can be derived which can be fed into the phase-characterised signal derived from the array coils to bring about correction for the tilt.

Using the symbols on Fig. 6 the matters discussed above can be treated mathematically. Let $V_d$ be the output voltage from the apparatus (e.g. voltage at terminals 13 in Figure 2) when coils 10A and 10B are vertically above a point X. When the pen tilts coil 10A will give an apparatus output voltage $V_A$ where:

$$V_A=V_d+K\ R_A \cos\theta \quad \text{(i)}$$

and K is the ideally constant voltage per unit length of *d* and $\theta$ is the angle the pen makes with the horizontal.

Coil 10B will give an apparatus output voltage $V_B$ where:

$$V_B=V_d+K\ R_B \cos\theta \quad \text{(ii)}$$

If $R_B$ is selected to be twice $R_A$ then from equation (ii)

$$V_B=V_d+2K\ R_A \cos\theta \quad \text{(iii)}$$

and,

$$V_B-V_A=K\ R_A \cos\theta \quad \text{(iv)}$$

If this difference signal (iv) is subtracted from $V_A$ (i) then a voltage is derived which is the voltage proper to be recorded when the tip of the pen is at X. It is independent of pen tilt.

The difference signal may be used as a signal proportional to pen angle or, when differentiated may be used to obtain angular velocity of the pen. Such information can be of importance in signature verification. The pen could be provided with a pressure sensitive switch so that it only functions when the pen tip contacts a writing surface.

In Fig. 7, X and Y co-ordinate phase characterised signals (such as may arise from arrays 22 and 23 in Figure 4) are connected respectively to amplifier input terminals 13X and 13Y. A reference signal tapped from a local coil 10 is connected to amplifier input terminal 14. The reference signal receives one stage of amplification which is fed respectively to the X and Y sections of the amplifier via connectors 40 and 41. (Only the Y section is described below). The signal at terminal 13Y is given two stages of amplification whereafter it is used with the amplified reference signal Y to switch on and off a flip-flop circuit 42 to give a mark/space waveform which is smoothed in circuit 43, 44 and 45 to give an apparatus output signal Vo.

The circuit of Figure 7 is designed to work on conjunction with a pen with two coils (Figure 6) thus there are two parallel circuits 44, 45 which can operate alternately in synchronism with powering of coils 10A, 10B and a compensation circuit 46 to provide the differential signal (iv) referred to above.

In a modification, the coil arrangement 10 may include its own power supply and oscillator so that there are no connecting wires. This is very advantageous when the coil arrangement 10 is mounted on a "conventional" pen. To provide a reference signal against which phase can be related, a single coil would be provided surrounding the area occupied by coil arrangement 11.

Alternatively, where wires are provided to coil arrangement 10, the wire could also be used to hold the coil captive or be incorporated in a lead holding a pen, which includes the coil, captive.

It would be possible to make the coil arrangement 10 null seeking in response to phase related signals supplied to coils in the coil arrangement 11, so that coil 10 could be moved.

Both coil arrangements 10, 11 could be included in a single piece of apparatus, such as a safe, with coil 10 mounted on a cordless pen, and the writing surface 21 being a part or on the apparatus and coil arrangement 11 being below surface 21. Signature verification circuits could be included in the apparatus which could then be stimulated by a verified signature or mark.

In another application the table 21 has applied to it some printed information such as a list of goods with empty "boxes" alongside each item of goods. The boxes could be marked with a pen 30 to indicate the stock of the goods that are held or that more stock of the goods identified by the pen are required. In an improved arrangement the marking could be by letters or numbers or both to indicate typically the number and sizes of goods in stock or goods required.

The output from table 21 could then be supplied to a micro-processor and the output of the micro-processor fed to a central computer that could be programmed to perform a number of operations such as might be involved with stock accounting and supply.

The phase-characterised output signal from apparatus according to the invention can be processed in a number of ways. Two examples will be given:

Example I

A pulse derived from a zero cross-over detector acting on a reference signal is held by a flip-flop or monostable which opens an AND gate and permits clock pulses from a clock pulse generator to pass into a register. A pulse derived from a zero cross-over detector acting on a phase-characterised signal switches off the AND gate and thus the number of clock pulses in the register is a measure of the phase angle.

Example II

A pulse derived from a zero cross-over detector acting on a reference signal sets a flip-flop and a pulse derived from a zero cross-over detector acting on a phase-characterised signal re-sets the flip-flop to zero. The output of the

flip-flop during the ON time is limited to a precise voltage and to zero voltage during the OFF time. This is called a variable mark/space system where the average output voltage is proportional to the relative timing of the two pulses and therefore the phase position. Thus, for a movement of the local coil arrangement across the array coil arrangement, the output signal voltage changes from zero to a maximum. Moreover, by differentiating the output signals by known methods, velocity and acceleration may be obtained.

The coils 11 may be fixed below a writing surface made of wood, or any non-conducting and non-magnetic material of any thickness within limits set by the initial design to form a writing tablet. The apparatus of the invention will also work when placed below some metal surfaces (with certain limitations); stainless steel for example being effectively non-conducting at operational frequencies of 2 to 10 KHZ.

By use of the invention it is possible to provide a position sensing apparatus having a writing surface which is completely plain and free from anything above it other than a pen. Thus the apparatus, with a conventional looking pen, can, if necessary for security purposes, be completely concealed even when in use.

The invention has application to a number of fields such as transferring data on a surface to a store, to a display, to a transmitter or to a comparator. The data could typically be in graph form and transferred in digital form to a computer programmed to analyse the data. The data could be a signature which has to be transferred for verification by comparison with a reference signature. As a means of signature verification, the invention has certain advantages; reference data against which a comparison has to be made, can be stored at a point remote from where the signature is made and it may be kept concealed so that it cannot be photographed or reproduced.

The invention has use in conjunction with processors and transmission lines for transmitting cursive and non-cursive writing and recognition.

The invention is suitable for providing apparatus in many different sizes. The length of the coils 11 may typically be up to 1000 millimetres in length. The width of the coils 11 may be in the range of a few millimetres to fifty millimetres. Usually there will only be a small space between the coils 11. The size of the coil 10 is not critical. If it is to be carried on a pen then it will have a size such that the pen is not cumbersome or so that it can be concealed in the pen.

## Claims

1. Position sensing apparatus of the kind comprising a first coil arrangement (11) defining a co-ordinate direction (22 or 23) and a second coil arrangement (10) movable relative to said first coil arrangement (11) in said co-ordinate direction wherein the two coil arrangements are electromagnetically coupled by applying an A.C. input signal to the input terminals (14) of the second coil arrangement (10) and output terminals (13) of the first coil arrangement (11) are provided whereat a signal is produced which identifies the relative position of the two coil arrangements characterised in:

— that the first coil arrangement (11) comprises a multiplicity of at least three coils (11) each shaped to have a length greater than its width and mounted with their major axes lateral to each other and transverse to said co-ordinate direction;

— that phase angle shifting units (12) are provided at (Fig. 5A) or between (Fig. 5B) the coils of the first coil arrangement (11) so that the coils and the units define a network having a progressive phase angle (Φ) change characteristic and so that the signal at the output terminals (13) is given a progressive phase angle shift which is unambiguously representative of the relative positioning (d) of the two coil arrangements; and

— that the coil arrangements (10, 11) are loosely coupled with each other so that the phase angle (Φ) change with said relative positioning (d) is linear.

2. Position sensing apparatus as claimed in claim 1, in which the parameters of the phase angle shifting units (12) are such that the phase angle shift per unit is in the range of 10 to 45 degrees and the phase angle shift over the first coil arrangement is less than 360°C.

3. Position sensing apparatus as claimed in claim 1 in which the parameters of the phase angle shifting units (12) are such that the phase angle shift over the first coil arrangement is greater than 360° and an ambiguity eliminating circuit is provided so that a position represented by a phase angle shift in the range of 0—360 degrees is distinguishable from a phase angle shift in higher ranges.

4. Position sensing apparatus as claimed in claim 3 in which the ambiguity eliminating circuit includes two sets of phase angle shift circuits (12) one set having a greater phase angle shift per pair of adjacent coils (11) than the other and each set providing an output, and means combining said outputs.

5. Position sensing apparatus as claimed in claim 1 in which the second coil arrangement (10) is carried on a pointed member (30) simulating a pen and the first coil arrangement (11) is located below a tablet (21) of non-magnetic material.

6. Position sensing apparatus as claimed in claim 5 in which the second coil arrangement (10) comprises two coils (10A, 10B) spaced apart on said pointed member (30) in which the

spacing of one of said two coils from the point of the member is twice the spacing of the other coil from said point.

7. Position sensing apparatus as claimed in claim 5 having the phase-angle-characterised output connected to a micro-processor to convert said output into line transmissible signals.

8. Position sensing apparatus as claimed in claim 5 in which the phase-angle-characterised output from the first coil arrangement (11) has means for comparing it with stored information.

**Revendications**

1. Capteur de position du type comprenant un premier ensemble de bobinages (11) définissant une direction de coordonées (22 ou 23) et un second ensemble de bobinages (10) mobile par rapport au premier ensemble (11) dans ladite direction de coordonnées, les deux ensembles de bobinages étant couplés électromagnétiquement par application d'un signal d'entrée en courant alternatif aux bornes d'entrée (14) du second ensemble (10) et des bornes de sortie (13) du premier ensemble (11) étant prévues auxquelles apparät un signal qui identifie la position relative des deux ensembles à bobinage caractérisé par le fait que le premier ensemble de bobinages (11) comprend une pluralité d'au moins trois bobines (11) chacune formées pour avoir une longeuer supérieure à sa largeur et montées avec leures axes principaux disposés latéralement les uns par rapport aux autres et transversalement par rapport à ladite direction de coordonnées, que des éléments de décalage d'angle de phase (12) sont prévus à, ou entre, les bobines du premier ensemble (11) de telle sorte que les bobines et les éléments définissent un réseau à caractéristique de changement d'angle de phase (Φ) progressive et de sorte que le signal aux bornes de sortie (13) subisse un décalage d'angle de phase progressif qui est représentatif de manière non équivoque de positionnement relatif (d) des deux ensembles de bobines; et que lesdits ensembles (10, 11) sont couplés lâche l'un avec l'autre de telle sorte que le changement d'angle de phase (Φ) avec ce positionnement relatif (d) est linéaire.

2. Capteur de position selon la revendication 1, dans lequel les paramètres des éléments de décalage d'angle de phase (12) sont tels que le décalage d'angle de phase par élément est dans une zone de 10 à 45 degrés et le décalage d'angle de phase sur le premier ensemble de bobinages est inférieur à 360°C.

3. Capteur de position selon la revendication 1, dans lequel les paramètres des éléments de décalage d'angle de phase (12) sont tels que le décalage d'angle de phase sur le premier ensemble de bobinages est supérieur à 360° et un circuit d'élimination d'ambiguïté est prévu pour qu'une position représentée par un décalage d'angle de phases situé dans la zone de 0—360 degrés puisse être distingué d'un décalage d'angle de phase situé dans des zones plus élevées.

4. Capteur de position selon la revendication 3, dans lequel le circuit d'élimination d'ambiguïté comprend deux groupes de circuits de décalage d'angle de phase (12), un des groupes ayant un décalage d'angle de phase par paire de bobines adjacentes (11) supérieur à l'autre, et chaque groupe fournissant une sortie, et des moyens pour combiner lesdites sorties.

5. Capteur de position selon la revendication 1, dans lequel le second ensemble de bobinages (10) est porté, une pièce à pointe (30) simulant une plume, et le premier ensemble de bobinages (11) est situé sous une tablette (21) en matière non magnétique.

6. Capteur de position selon la revendication 5, dans lequel le second ensemble de bobinages (10) comprend deux bobines ($10_A$, $10_B$) écartées l'une de l'autre sur cette pièce à pointe (30), la distance séparant l'une desdites bobines de la pointe de la pièce étant le double de celle séparant l'autre bobine de la pointe.

7. Capteur de position selon la revendication 5, où la sortie caractérisant l'angle de phase est connectée à un micro-processeur pour convertir cette sortie en des signaux transmissibles par ligne.

8. Capteur de position selon la revendication 5, dans lequel la sortie du premier ensemble de bobinages (11) caractérisant l'angle de phase comporte des moyens pour la comparer avec une information mise en mémoire.

**Patentansprüche**

1. Positions-Abtastgerät mit einer ersten Spulenanordnung (11), die eine Koordinatenrichtung (22 oder 23) definiert, und einer zweiten Spulenanordnung (10), die relativ zur ersten Spulenanordnung (11) in der genannten Koordinatenrichtung beweglich ist, wobei die beiden Spulenanordnungen elektrisch gekoppelt sind durch Anlegen eines Wechselstrom-Eingangssignals an die Eingangsklemmen (14) der zweiten Spulenanordnung (10), und wobei Ausgangsklemmen (13) der ersten Spulenanordnung (11) vorgesehen sind, an denen ein Signal erzeugt wird, das die Relativstellung der beiden Spulenanordnungen identifiziert, dadurch gekennzeichnet,

— daß die erste Spulenanordnung (11) eine Mehrzahl von mindestens drei Spulen (11) aufweist, die jeweils so geformt sind, daß ihre länge größber als ihre Breite ist, und die mit ihren Hauptachsen nebeneinander und quer zur Koordinatenrichtung angeordnet sind;
— daß Phasenwinkel-Verschiebeeinheiten (12) an (Fig. 5A) oder zwischen (Fig. 5B) den Spulen der ersten Spulenanordnung (11) vorgesehen sind, derart, daß die Spulen und

die Einheiten ein Netzwerk mit einer progressiven Änderungscharakteristik des Phasenwinkels (Φ) definieren und dem Signal an den Ausgangsklemmen (13) eine progressive Phasenwinkelverschiebung gegeben wird, die eindeutig die Relativstellung (d) der beiden Spulenanordnungen wiedergibt, und

— daß die Spulenanordnungen (10, 11) lose miteinander gekoppelt sind, so daß die Änderung des Phasenwinkels (Φ) mit der Relativstellung (d) linear ist.

2. Gerät nach Anspruch 1, dadurch gekennzeichnet, daß die Parameter der Phasenwinkel-Verschiebeeinheiten (12) derart sind, daß die Phasenwinkelverschiebung pro Einheit im Bereich von 10 bis 45 Grad liegt und die Phasenwinkelverschiebung über der ersten Spulenanordnung geringer als 360° ist.

3. Gerät nach Anspruch 1, dadurch gekennzeichnet, daß die Parameter der Phasenwinkel-Verschiebeeinheiten (12) so sind, daß die Phasenwinkelverschiebung über der ersten Spulenanordnung größer als 360° ist, und daß eine Mehredeutigkeits-Ausräumschaltung vorgesehen ist, derart, daß eine durch eine Phasenwinkelverschiebung im Bereich von 0—360° wiedergegebene Position von einer Phasenwinkelverschiebung in höheren Bereichen unterscheidbar ist.

4. Gerät nach Anspruch 3, dadurch gekennzeichnet, daß die Mehrdeutigkeits-Ausräumschaltung zwei Sätze von Phasenwinkel-Verschiebeeinheiten (12) enthält, von denen der eine Satz eine größere Phasenwinkelverschiebung pro Paar von benachbarten Spulen (11) hat als der andere, wobei jeder Satz einen Ausgang liefert, und daß sie ferner eine Einrichtung enthält, welche diese Ausgänge kombiniert.

5. Gerät nach Anspruch 1, dadurch gekennzeichnet, daß die zweite Spulenanordnung (10) an einem angespitzten Bauteil (30) sitzt, der einen Schreibstift simuliert, und daß die erste Spulenanordnung (11) unter einem Tablett (21) aus nichtmagnetischem Material angeordnet ist.

6. Gerät nach Anspruch 5, dadurch gekennzeichnet, daß die zweite Spulenanordnung (10) zwei Spulen (10A, 10B) aufweist, die auf dem angespitzten Bauteil (30) im Abstand voneinander angeordnet sind, wobei der Abstand der einen dieser beiden Spulen von der Spitze des Bauteils doppelt so groß ist wie der Abstand der anderen Spule von dieser Spitze.

7. Gerät nach Anspruch 5, dadurch gekennzeichnet, daß der phasenwinkelcharakterisierte Ausgang mit einem Mikro-prozessor verbunden ist, um diesen Ausgang in über Leitung übertragbare Signale umzuwandeln.

8. Gerät nach Anspruch 5, dadurch gekennzeichnet, daß für den phasenwinkelcharakterisierten Ausgang aus der ersten Spulenanordnung (11) eine Einrichtung zum Vergleichen desselben mit gespeicherter Information vorgesehen ist.

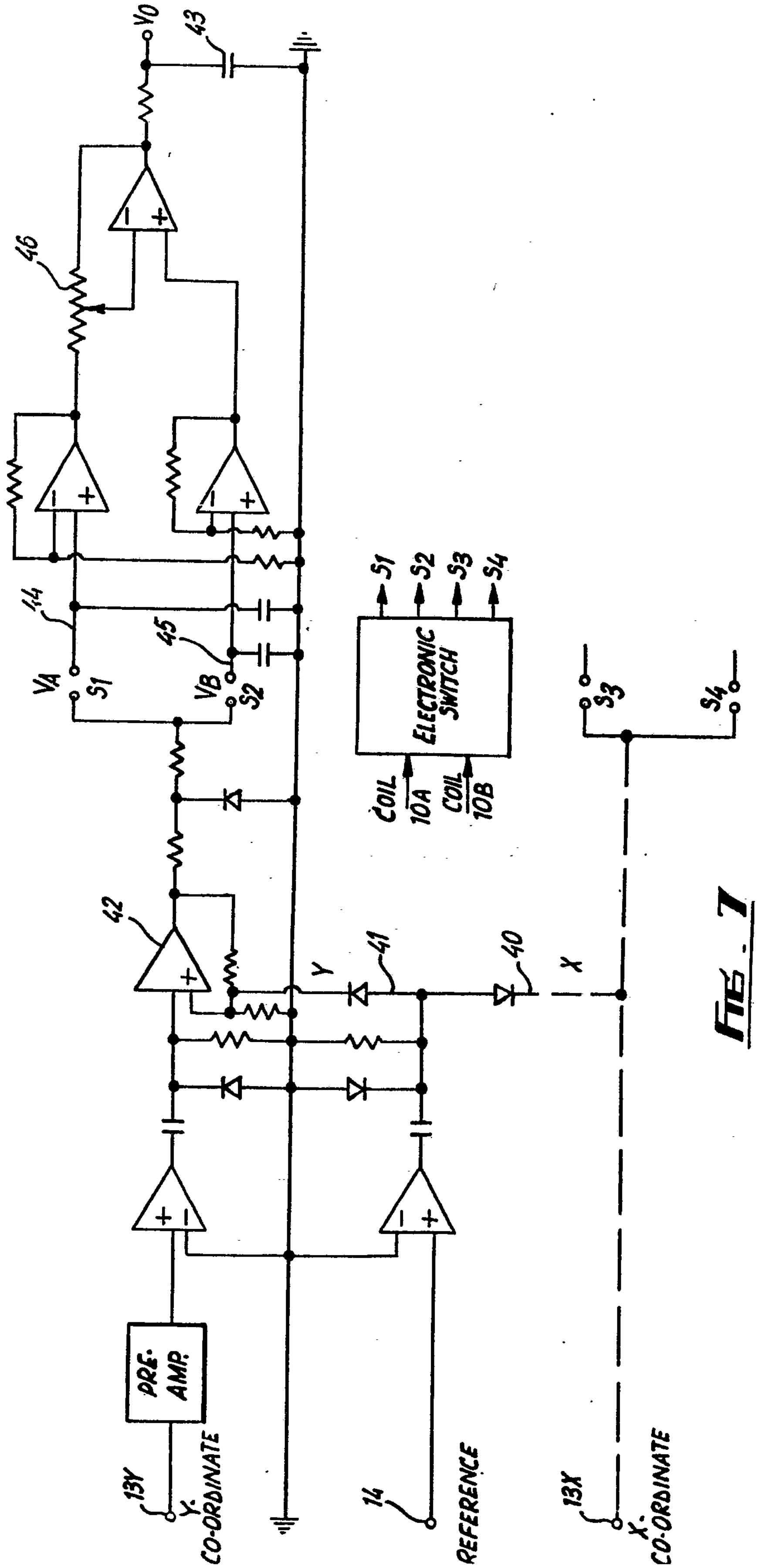

VO
43
46
VA
S1
44
VB
S2
45
S1
S2
S3
S4
ELECTRONIC SWITCH
COIL 10A
COIL 10B
S3
S4
42
Y
41
40
X
PRE-AMP.
13Y
Y-CO-ORDINATE
14
REFERENCE
13X
X-CO-ORDINATE


FIG. 7

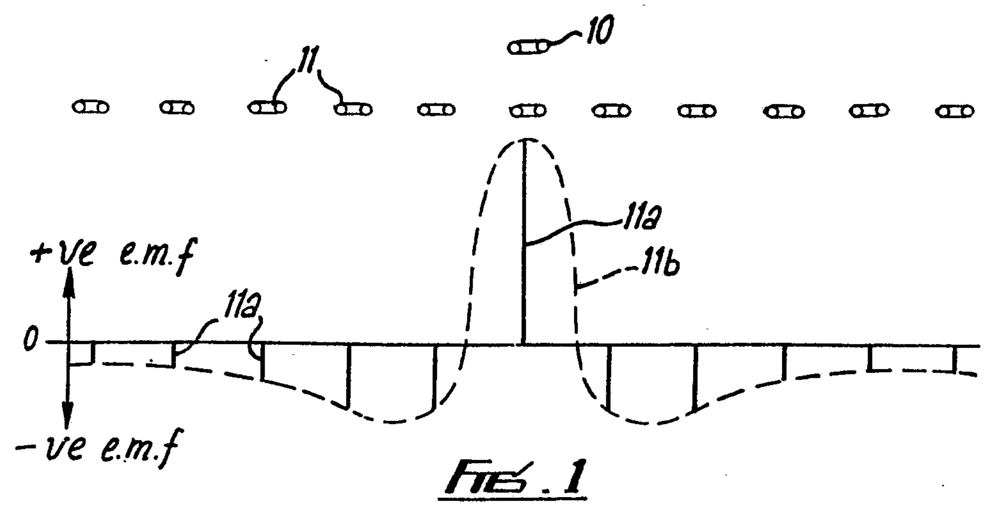


Fig. 1

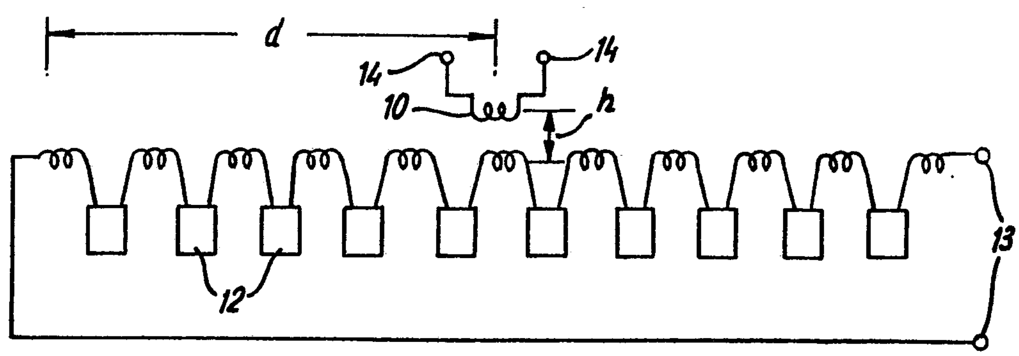


Fig. 2

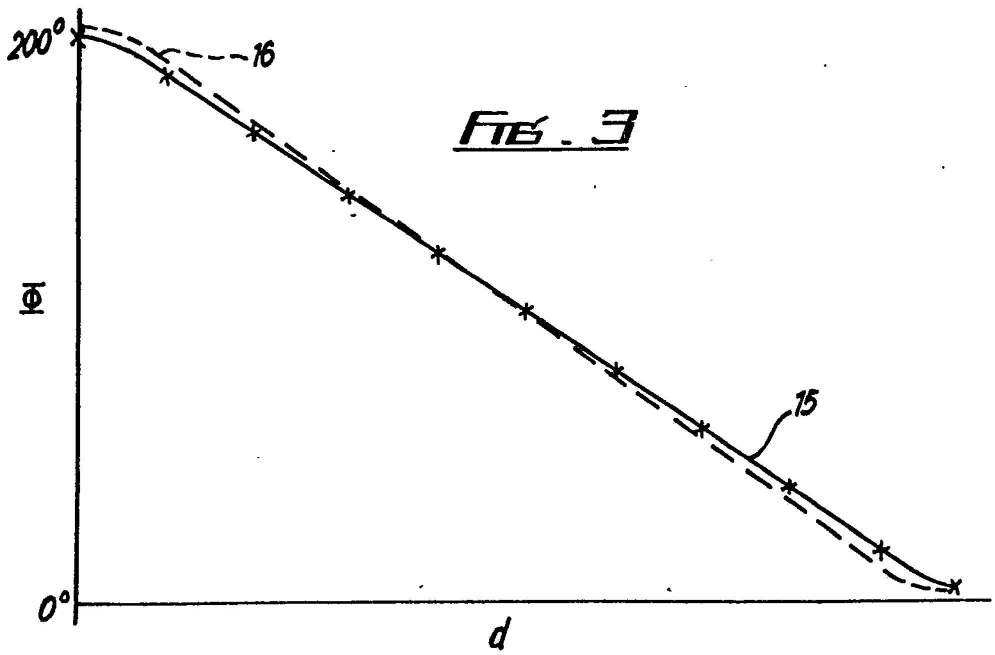


Fig. 3

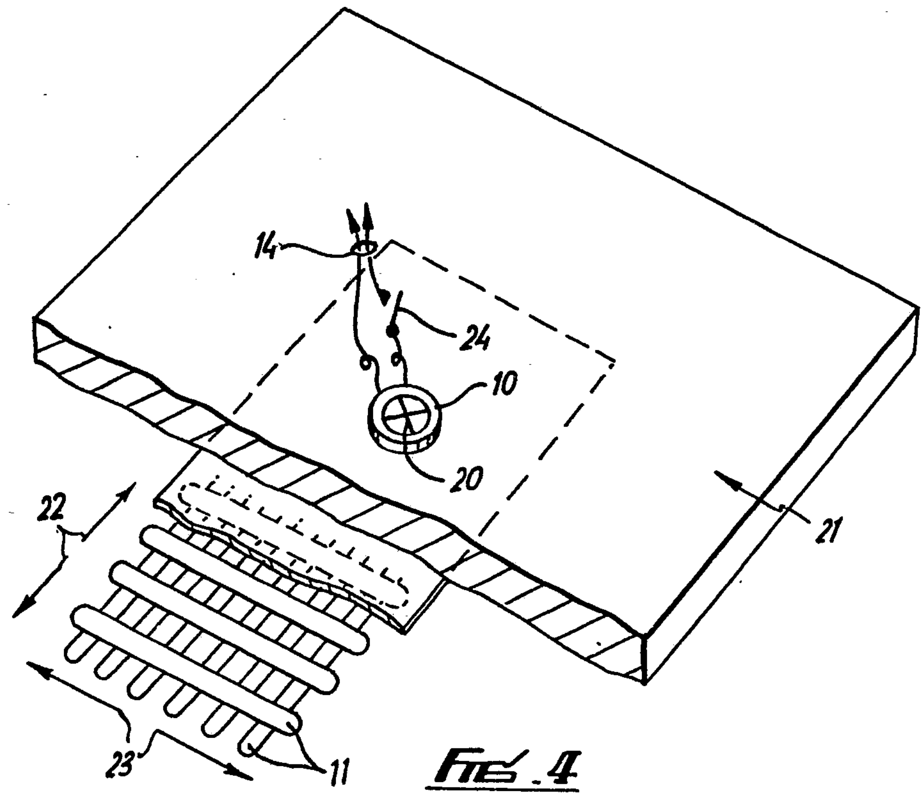


FIG. 4

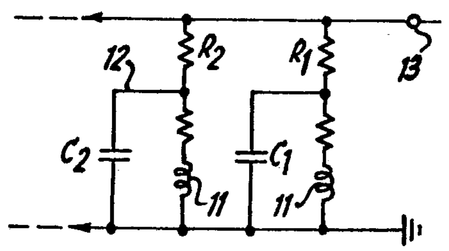


FIG. 5A

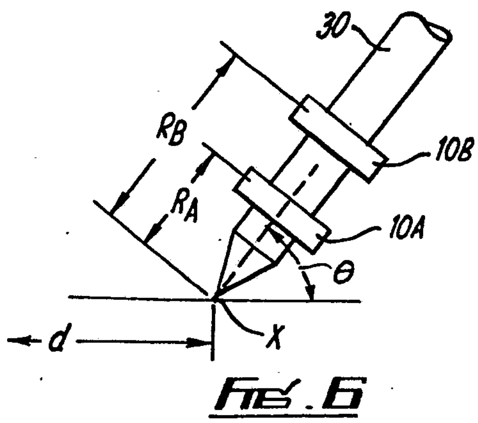


FIG. 6

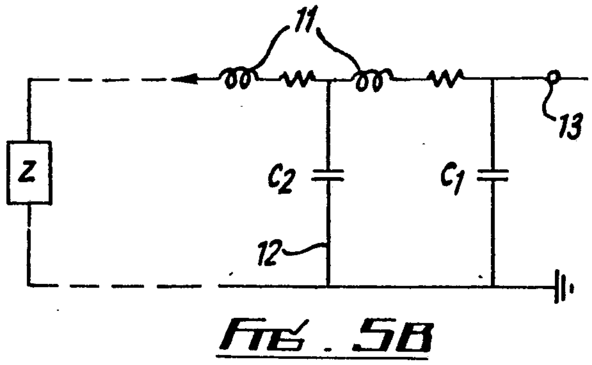


FIG. 5B